# EUROPEAN PATENT APPLICATION

(11) **EP 1 853 059 A1**
(43) Date of publication of application: **07.11.2007**
(21) Application number: 06713862.8
(22) Date of filing: 16.02.2006
(51) Int. Cl.: H04N 5/335

(54) **MOS TYPE SOLID-STATE IMAGE PICKUP DEVICE, METHOD FOR DRIVING SUCH MOS TYPE SOLID-STATE IMAGE PICKUP DEVICE, AND CAMERA**

(30) Priority: 23.02.2005 JP 2005048021; 02.11.2005 JP 2005320188
(71) Applicant: MATSUSHITA ELECTRIC INDUSTRIAL CO., LTD., Osaka 571-8501 (JP)
(72) Inventor: MUROSHIMA, Takahiro c/o Matsushita El. Ind. Co., Ltd., Chuo-ku, Osaka-shi, Osaka 540-6207 (JP); MURAKAMI, Masashi c/o Matsushita El. Ind. Co., Ltd., Chuo-ku, Osaka-shi, Osaka 540-6207 (JP)
(74) Representative: Pautex Schneider, Nicole Véronique
(86) International application number: PCT/JP2006/302721
(87) International publication number: WO 2006/090633

(57) **Abstract**

A MOS type solid-state image pickup device of the present invention is composed of: a pixel unit (110) which includes image pickup elements arranged two-dimensionally; a readout shift register (111); an electronic shutter shift register (112); a signal processing unit (113) which extracts a pixel signal from the selected pixel; a horizontal shift register (114) which outputs a column selection signal; and an amplifier circuit (115) which amplifies the extracted pixel output signal. Each of the shift registers (111) and (112) has a function of generating a dummy pulse during a blanking period. When the blanking period occurs after the completion of scanning up to the last line, a selection signal is outputted alternately to the last line (m) and the second-from-the-last line (m-1) of the shift register.

## Description

### Technical Field

The present invention relates to a MOS type solid-state image pickup device that includes a MOS dynamic type shift register, and to a method for driving such a device.

### Background Art

In recent years, an electronic shutter has been adopted for electronic aperture control of a MOS type solid-state image pickup device.

Signal charge, which has been generated and accumulated through photoelectric conversion in a photodiode of an image pickup element, is transferred to a floating diffusion when read out, and then is reset. In general, although the accumulation is started again after the reset, the signal charge can be accumulated only for a certain period of time corresponding to a frame rate.

On the other hand, the electronic shutter allows a period of time for the accumulation of the signal charge in the photodiode to be variable, by transferring the signal charge accumulated in the photodiode to the floating diffusion for resetting before the readout.

The reset and readout of the signal charge in the photodiode are performed through an electronic shutter operation by a plurality of shift registers for each line. The number of stages in each shift register is equal to the number of lines of the image pickup elements, and clock signals are set to be in synchronization with a shift operation. On account of this, when light of the same intensity enters all of the image pickup elements, the same amount of signal charge can be accumulated in each photodiode in theory.

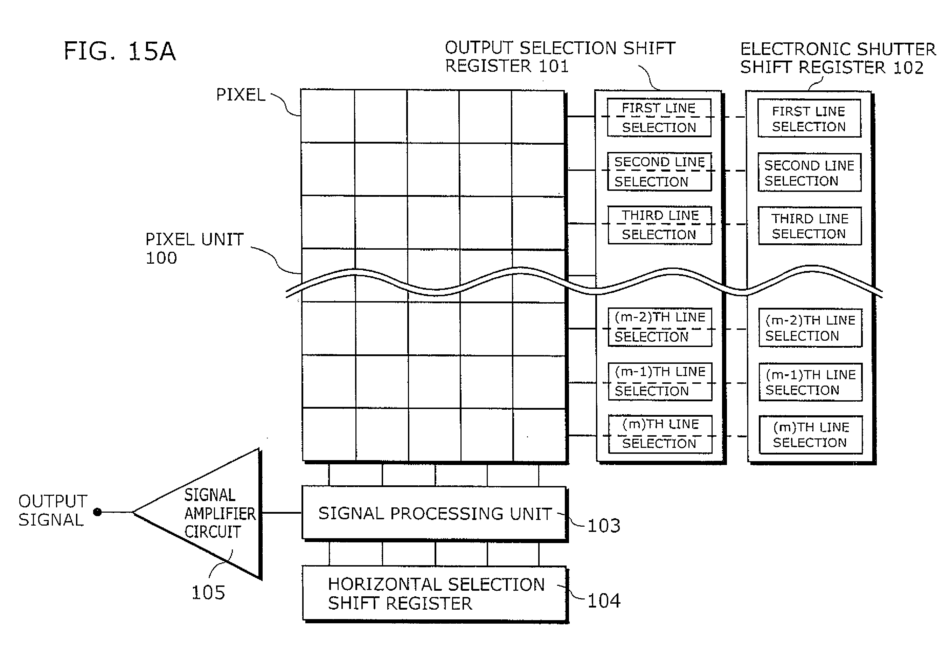

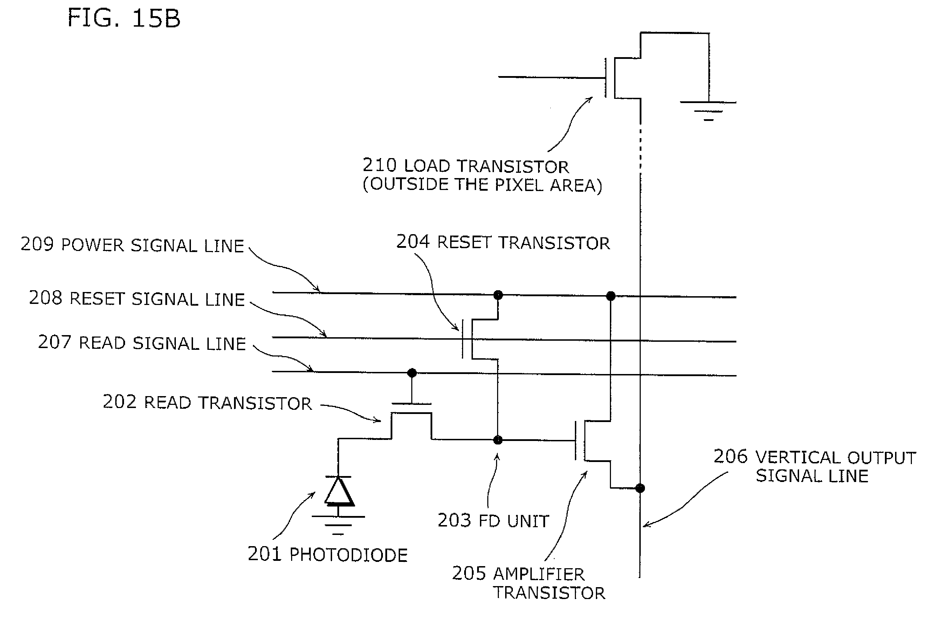

FIG. 15A shows an entire construction of a conventional common MOS type solid-state image pickup device whereas FIG. 15B shows a construction of a pixel cell that is an image pickup element (see Patent Reference 1).

This solid-state image pickup device is composed of: a pixel unit 100 that includes image pickup elements arranged two-dimensionally; a shift register 101 that outputs a line selection signal to select one line of the pixel unit 100 for a readout operation; a shift register 102 that outputs a line selection signal to select one line of the pixel unit 100 for an electronic shutter operation; a signal processing unit 103 that extracts a pixel signal from the selected pixel; a horizontal selection shift register 104 that outputs a column selection signal; and an amplifier circuit 105 that amplifies the extracted pixel output signal.

Moreover, each pixel is provided with: a photodiode 201 that converts the incident light into signal charge; a read transistor 202 that reads the signal charge generated in the photodiode 201; a floating diffusion unit (FD unit) 203 that holds the read signal charge; a reset transistor 204 that resets the FD unit 203 to a potential of a power signal line 209; an amplifier transistor 205 that amplifies and outputs the potential change of the FD unit 203; a vertical output signal line 206 that sends the output signal from the amplifier transistor 205 to the signal processing unit 103; a readout signal line 207 that inputs a line selection signal for the readout operation to the read transistor 202; a reset signal line 208 that sends a selection signal to the reset transistor 204; and a power signal line 209 that is power to the amplifier transistor 205.

Furthermore, a load transistor 210 that keeps the voltage of the vertical output signal line 206 constant is provided outside a pixel area. The load transistor 210 forms a source follower circuit with the amplifier transistor 205 of the selected line when the pixel output signal is read out.

The vertical output signal line 206 is provided for each column, and is connected to an output of the corresponding amplifier transistor 205 of each line.

The readout signal line 207 is provided for each line, and is connected to an input of the read transistor 202 of the corresponding line. Signals are supplied to the readout signal line 207 from the shift registers 101 and 102.

The reset signal line 208 is provided for each line, and is connected to an input of the reset transistor 204 of the corresponding line. Signals are supplied to the reset signal line 208 from the shift registers 101 and 102.

The power signal line 209 is provided for each line, and is connected to drains of the reset transistor 204 and the amplifier transistor 205 of the corresponding line.

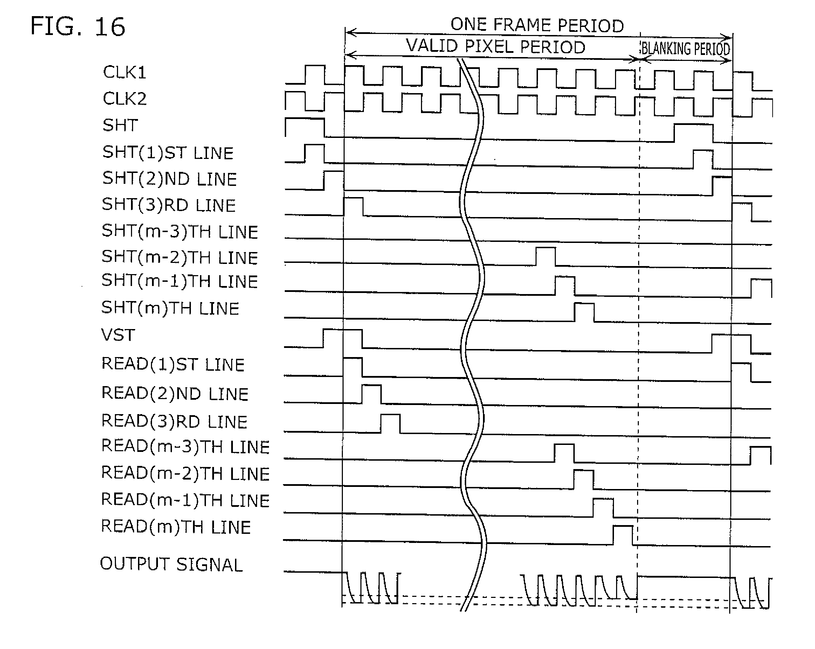

FIG. 16 shows a timing chart of the common MOS type solid-state image pickup device.

For an electronic shutter operation, a start signal SHT is first inputted to the shift register 102 for an electronic shutter, so that a shift operation is started in synchronization with clock signals CLK1 and CLK2 for the shift operation and that the signal charges accumulated in the photodiodes of the image pickup elements are reset for each line using selection signals of SHT(1)^{th} line to SHT(m)^{th} line. Next, a start signal VST is inputted to the readout shift register 101, so that the shift operation is started in synchronization with the clock signals CLK1 and CLK2 and that the signal charges accumulated in the photodiodes are read out for each line using readout selection signals of READ(1)^{th} line to READ(m)^{th} line. Here, an accumulation time for the signal charge refers to a time lag between the start signals SHT and VST respectively inputted to the above-mentioned two shift registers. After the readout from the readout shift register for each line using the selection signal, the read signal is held by the signal processing unit 103. Then, a column is selected in accordance with a selection signal from the horizontal selection shift register 104, and the amplified signal is outputted through the amplifier circuit 105.

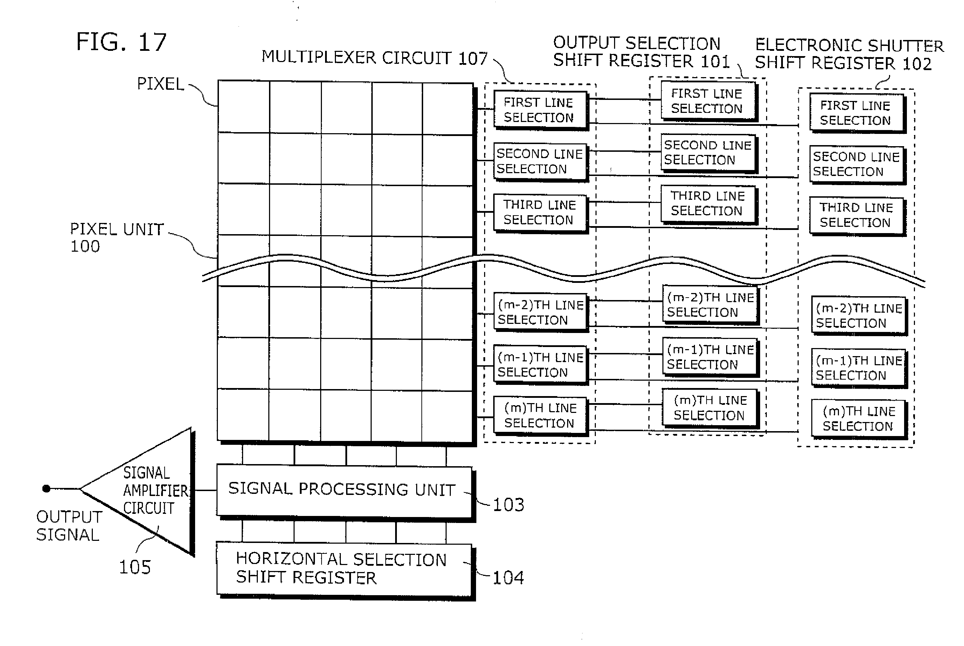

FIG. 17 is a diagram showing an entire construction of another conventional MOS type solid-state image pickup device (see Patent Reference 2).

As compared to the solid-state image pickup device shown in FIG. 15A, the solid-state image pickup device in this diagram has the construction in which a multiplexer circuit 107 composed of m number of unit selection circuits is added. In the case of the solid-state image pickup device shown in FIG. 15A, the electronic shutter shift register 102 outputs the selection signals SHT(1) to SHT(m) in synchronization with the clock signals CLK1 and CLK2. In the case of the solid-state image pickup device shown in FIG. 17, on the other hand, the output timing of the selection signals SHT(1) to SHT(m) from the multiplexer circuit 107 is arbitrarily variable. On this account, each unit selection circuit of the multiplexer circuit 107 holds the selection signal SHT(i) for one horizontal scanning period, and then outputs the held selection signal in synchronization with a drive pulse that is externally given during this period. Accordingly, the signal accumulation time, that is, a time taken from the SHT(i) pulse to the READ(i) pulse, can be set with more flexibility.
Patent Reference 1: Japanese Laid-Open Patent Application No. 2000-125203
Patent Reference 2: Japanese Laid-Open Patent Application No. 2004-312311

### Disclosure of Invention

### Problems that Invention is to Solve

According to the above conventional technique, after the scanning of the pixel unit is completed, a blanking period occurs, during which each of the shift registers does not operate until a start signal is inputted for a next frame.

Due to the presence of this blanking period, the electric potential state of the vertical output signal line 206 varies between: when the electronic shutter shift register and the readout shift register are both scanning the image pickup unit; and when either of the electronic shutter shift register and the readout shift register is in the blanking period. This is because the read signal line 207, the reset signal line 208, and the like cross the vertical output signal line 206, and each accordingly has a parasitic capacity. The variations in the electric potential state of the vertical output signal line 206 result in variations in the output voltage even with incident light of the same intensity, thereby causing a horizontal strip noise to an image that thus degrades the image quality.

The present invention is conceived in view of the problem described above, and has an object of providing a MOS type solid-state image pickup device for preventing occurrence of noise resulted from the electronic shutter and a method for driving such a device.

### Means to Solve the Problems

In order to solve the problem described above, the MOS type solid-state image pickup device of the present invention includes: a pixel unit and a plurality of shift registers, the pixel unit including image pickup elements arranged in a matrix, and the plurality of shift registers each selecting a line or a column of the pixel unit, wherein at least one of the plurality of shift registers, each of which selects a line, includes: a plurality of unit registers, each of which holds a selection signal; and a dummy signal generation circuit which outputs a dummy selection signal to a last line and a line that is at least second from the last line of the pixel unit, during a blanking period of a line scanning operation performed on the pixel unit. With this construction, the dummy selection signal is alternately outputted, during the blanking period, from the unit register that selects the last line and from the unit register that is at least one stage ahead of the unit register that selects the last line, so that the variations in the electric potential state of the vertical signal line between the valid pixel period and the blanking period is eliminated. On account of this, a horizontal strip noise in an image due to the electronic shutter operation can be prevented from occurring, and a high-quality image can be thus obtained.
It is preferable that the dummy signal generation circuit has a reset circuit which resets a unit register of a last stage and a unit register of a second-from-the-last stage using a value of the unit register that is one stage ahead of the unit register that selects the last line.

It is preferable that the dummy selection signal is outputted alternately to the last line and the line that is at least second from the last line, at constant intervals.

It is preferable that the dummy signal generation circuit: includes a unit register of a last stage and a unit register of a stage that is at least second from the last stage; and constructs a loop by inputting an output signal of the unit register of the last stage to the unit register of the stage that is at least second from the last stage.

It is preferable that the unit register of the last stage is set subsequent to the unit register that selects the last line of the pixel unit, and the output signal of the unit register of the last stage is inputted to the unit register that selects the last line and to the unit register that selects the second-from-the-last line.

The unit register of the last stage may select the last line of the pixel unit, and the output signal of the unit register of the last stage may be inputted to the unit register of the second-from-the-last stage.

It is preferable that the output signal of the unit register of the last stage is inputted to the unit register of the stage that is at least second from the last stage, via a current-entering prevention unit.

It is preferable that a value held in said unit register of the second-from-the-last stage is inputted to and held in said unit register of the last stage, in synchronization with a first signal for a shift operation of said shift register which selects a line, and a value held in said unit register of the last stage is inputted to and held in said unit register of the second-from-the-last stage, in synchronization with a second signal for a shift operation of said shift register which selects a line.

It is preferable that the dummy signal generation circuit further has a reset unit which resets the value held in the unit register of the last stage, using a start signal for the shift register.

It is preferable to further have a unit which resets an output of the unit register of the last stage using an inversion signal of the output from the reset unit.

It may have a reset unit which resets the value held in the unit register of the last stage and an output of the unit register of the last stage, using a start signal for the shift register.

It is preferable that the shift registers, each of which selects a line, includes: a readout shift register which outputs a line selection signal to select a line of the pixel unit for an operation performed to read out an output signal of the pixel unit; and an electronic shutter shift register which outputs a line selection signal to select a line of the pixel unit for an electronic shutter operation.

It is preferable that each of the readout shift register and the electronic shutter shift register outputs the dummy selection signal during the blanking period.

It is preferable that the MOS type solid-state image pickup device further includes a multiplexing unit which multiplexes, for each line, the line selection signal outputted from the readout shift register and the line selection signal outputted from the electronic shutter register and outputs the multiplexed signal to the pixel unit, wherein when a first dummy signal and a second dummy signal are outputted to the same line at the same time, the multiplexing unit cuts off one of the inputs of the first and second dummy signals, the first dummy signal being the dummy selection signal outputted from the readout shift register, and the second dummy signal being the dummy selection signal outputted from the electronic shutter shift register.

It is preferable that the multiplexing unit includes a cut-off switch which electrically cuts off one of the inputs of the first and second dummy signals outputted to the same line at the same time, by using the other one of the dummy selection signals.

It is preferable that the cut-off switch is turned on or off in accordance with the first dummy signal.

It is preferable that the multiplexing unit includes a first output circuit and a second output circuit, the first output circuit outputting the first dummy signal to a line-selection signal line in synchronization with a first drive signal, and the second output circuit outputting the second dummy signal to the line-selection signal line in synchronization with a second drive signal, and that the cut-off switch is inserted into an input signal line which transmits the second dummy signal to the second output circuit.

It is preferable that the multiplexing unit further includes a stop circuit, which stops an operation of the second output circuit when the first and second dummy signals are outputted to the same line at the same time.

It is preferable that the stop circuit further stops the second output circuit when the first dummy signal is outputted.

It is preferable that the stop circuit has an inverter for inverting the first dummy signal, and turns off the cut-off switch in accordance with the inversion signal.

It is preferable that the inverter has a load resistance and a drive transistor which are series connected between a power line and a ground line and that a resistance value of the load resistance is greater than a resistance value of the drive transistor.

It is preferable that the cut-off switch and the stop circuit are provided corresponding to a line to which the first and second dummy signals are to be outputted.

A camera of the present invention includes the above-described MOS type solid-state image pickup device of the present invention.

A driving method for the MOS type solid-state image pickup device of the present invention is a method for driving a MOS type solid-state image pickup device which includes a pixel unit and a plurality of shift registers, the pixel unit including image pickup elements arranged in a matrix, and the plurality of shift registers each selecting a line or a column of the pixel unit, and the method including a step of outputting, during a blanking period of a line scanning operation performed on the pixel unit, a dummy selection signal to at least a last line of the pixel unit from a shift register, out of the plurality of shift registers which each select a line.

It is preferable that the shift register for selecting a line outputs the dummy selection signal to the last line and a line that is at least second from the last line, the lines being included in the pixel unit.

It is preferable that the dummy selection signal is outputted alternately to the last line and the line that is at least second from the last line, at constant intervals.

It is preferable that a signal for driving at least the shift register which selects a line is externally supplied.

Another driving method for the MOS type solid-state image pickup device of the present invention is a method for driving a MOS type solid-state image pickup device which includes a pixel unit, a readout shift register, and an electronic shutter shift register, the pixel unit including image pickup elements arranged in a matrix, the readout shift register outputting a line selection signal to select one line of the pixel unit for an operation performed to read out an output signal of the pixel unit, the electronic shutter shift register outputting a line selection signal to select one line of the pixel unit for an electronic shutter operation, and the method including a step of outputting, during a blanking period of a line scanning operation performed on the pixel unit, a dummy selection signal to at least a last line of the pixel unit from each of the readout shift register and the electronic shutter shift register.

It is preferable that each of the readout shift register and the electronic shutter shift register outputs the dummy selection signal to the last line and a line that is at least second from the last line, the lines being included in the pixel unit.

It is preferable that the dummy selection signal is outputted alternately to the last line and the line that is at least second from the last fine, at constant intervals.

It is preferable that signals for respectively driving at least the readout shift register and the electronic shutter shift register are externally supplied.

It is preferable that the MOS type solid-state image pickup device further includes a multiplexer which multiplexes, for each line, the line selection signal outputted from the readout shift register and the line selection signal outputted from the electronic shutter register and outputs the multiplexed signal to the pixel unit, and that the driving method further includes a step of cutting off, when a first dummy signal and a second dummy signal are outputted to the same line at the same time, one of the inputs of the first and second dummy signals to the multiplexer, the first dummy signal being the dummy selection signal outputted from the readout shift register, and the second dummy signal being the dummy selection signal outputted from the electronic shutter shift register.

It is preferable that in the cutting-off step, one of the inputs of the first and second dummy signals outputted to the multiplexer to the same line at the same time is electrically cut off by using the other one of the dummy selection signals.

It is preferable that in the cutting-off step, the input of the second dummy signal to the multiplexer is cut off in accordance with the first dummy signal.

### Effects of the Invention

According to the MOS type solid-state image pickup device of the present invention, the dummy selection signal is alternately outputted, during the blanking period, from the unit register that selects the last line and the unit register that is at least one stage ahead of the unit register that selects the last line, so that the variations in the electric potential state of the vertical signal line between the valid pixel period and the blanking period is eliminated. On account of this, a horizontal strip noise in an image due to the electronic shutter operation can be prevented from occurring, and a high-quality image can be thus obtained.

Moreover, the timing of the electronic shutter can be arbitrarily set within one horizontal scanning period, and in addition, the image quality can be prevented from degrading.

### Brief Description of Drawings

FIG. 1 is a diagram showing a construction of a solid-state image pickup device according to a first embodiment of the present invention.
FIG. 2 is a timing chart showing drive timings of the solid-state image pickup device.
FIG. 3 is a block diagram showing a construction of a shift register.
FIG. 4 is a timing chart showing drive timings of the shift register.
FIG. 5A is a block diagram showing another construction of the shift register.
FIG. 5B is a block diagram showing another construction of the shift register.
FIG. 6A is a timing chart showing drive timings of the shift register shown in FIG. 5A.
FIG. 6B is a timing chart showing drive timings of the shift register shown in FIG. 5B.
FIG. 7 is a diagram showing a construction of a camera that employs the solid-state image pickup device.
FIG. 8 is a diagram showing a construction of a solid-state image pickup device according to a second embodiment of the present invention.
FIG. 9A is a circuit diagram showing a construction of a unit selection circuit.
FIG. 9B is a diagram for explaining an operation of the unit selection circuit.
FIG. 9C is a diagram for explaining a malfunction of the unit selection circuit for purposes of comparison.
FIG. 10 is a timing chart showing operation timings of the unit selection circuit for purposes of comparison.
FIG. 11 is a timing chart showing drive timings of the shift register for purposes of comparison.
FIG. 12A is a circuit diagram showing a construction of a unit selection circuit.
FIG. 12B is a diagram for explaining an operation of the unit selection circuit.
FIG. 12C is a diagram for explaining an operation of the unit selection circuit.
FIG.13 is a circuit diagram showing a construction of an inverter.
FIG. 14 is a timing chart showing drive timings of the shift register.
FIG. 15A is a diagram showing an entire construction of a conventional MOS type solid-state image pickup device.
FIG. 15B is a diagram showing a construction of a pixel cell of the conventional MOS type solid-state image pickup device.
FIG. 16 is a timing chart showing drive timings of the conventional MOS type solid-state image pickup device.
FIG. 17 is a diagram showing an entire construction of another conventional MOS type solid-state image pickup device.

### Numerical References

- 100, 110: pixel unit
- 101, 111: output shift register
- 102, 112: electronic shutter shift register
- 103, 113: signal processing unit
- 104, 114: horizontal selection shift register
- 105, 115: amplifier
- 201: photodiode
- 202: read transistor
- 203: FD unit
- 204: reset transistor
- 205: amplifier transistor
- 206: vertical output signal line
- 207: readout signal line
- 208: reset signal line
- 209: power signal line
- 210: load transistor
- REG1 to 4 and 11 to 14: unit registers
- TR1-1, 1-2, 2, and 3: register-value reset transistors
- INV1: inverter circuit
- TR4-1 to 4-4: diode-connected unidirectional transistors
- REG11 to 14: unit registers
- TR11, 12, 14 and 15: register-value reset transistors
- TR13: last-stage-register output transistor switch
- TR16-1 to 16-4: diode-connected unidirectional transistors
- INV11: inverter circuit

### Best Mode for Carrying Out the Invention

### (First Embodiment)

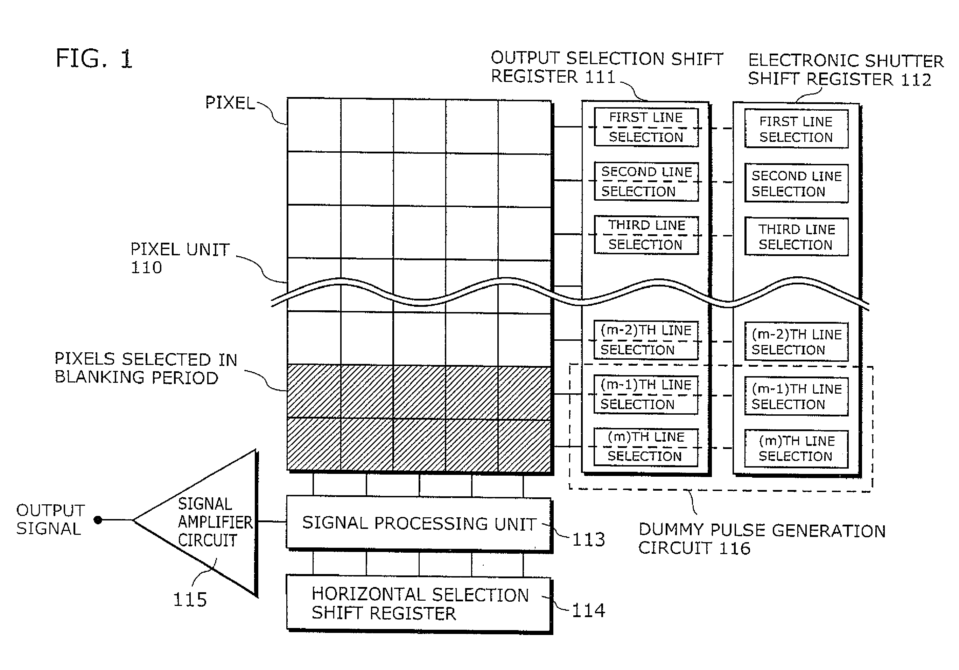

FIG. 1 is a diagram showing an entire construction of a MOS type solid-state image pickup device according to the embodiment of the present invention.

This solid-state image pickup device is composed of: a pixel unit 110 that includes image pickup elements arranged two-dimensionally; a shift register 111 that outputs a line selection signal to select one line of the image pickup unit for a readout operation; a shift register 112 that outputs a line selection signal to select one line of the image pickup unit for an electronic shutter operation; a signal processing unit 113 that extracts a pixel signal from the selected pixel; a horizontal selection shift register 114 that outputs a column selection signal; and an amplifier circuit 115 that amplifies the extracted pixel output signal. A construction of a pixel cell of the pixel unit 110 is the same as the one shown in FIG. 15B.

A dummy pulse generation circuit 116, which is indicated by a dash line, of the shift registers 111 and 112 has a function of generating a dummy pulse during the blanking period. When the blanking period occurs following the completion of the scanning up to the last line, a selection signal is outputted from the dummy pulse generation circuit 116 alternately to a last line (m) and a second last line (m-1) of the shift register.

This selection signal does not directly contribute to the operation for reading out the pixel output signal nor the electronic shutter operation, but is a so-called dummy signal which is outputted to keep the electric potential state of the vertical output signal line constant.

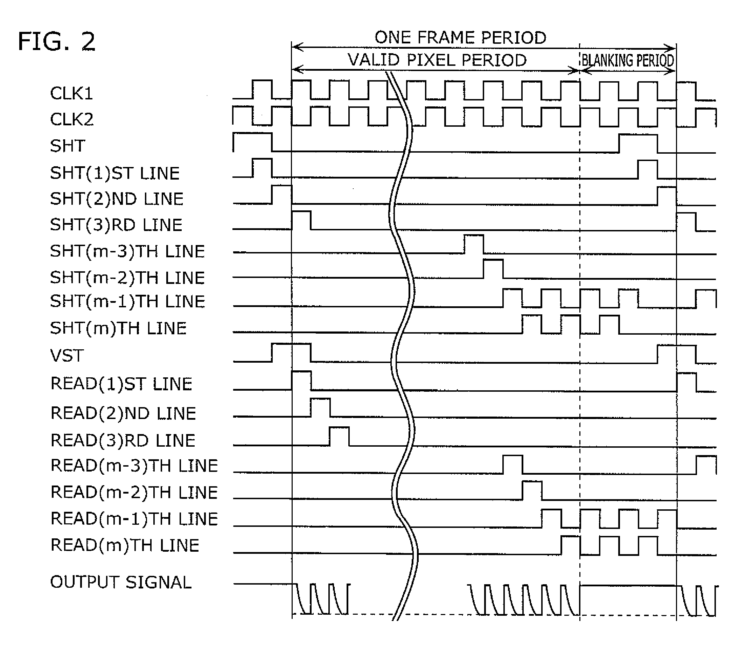

FIG. 2 shows a timing chart of the present embodiment. When a start signal SHT for the electronic shutter shift register is inputted, the line selection signals of SHT(1)^{th} line to SHT(m)^{th} line are sequentially outputted in synchronization with CLK1 and CLK2 for the shift operation so that the image pickup elements are reset for each line. Then, when a start signal VST for the readout shift register is inputted, the line selection signals of READ(1)^{th} line to READ(m)^{th} line are sequentially outputted in synchronization with CLK1 and CLK2 so that readout from the image pickup elements is performed for each line. When the selection signals of the last line, that is, the signals of SHT(m)^{th} line and READ(m)^{th} line, are outputted, the selection signals of the second last line, that is, the signals of SHT(m-1)^{th} line and READ(m-1)^{th} line, are outputted. In this way, the selection signals are alternately outputted.

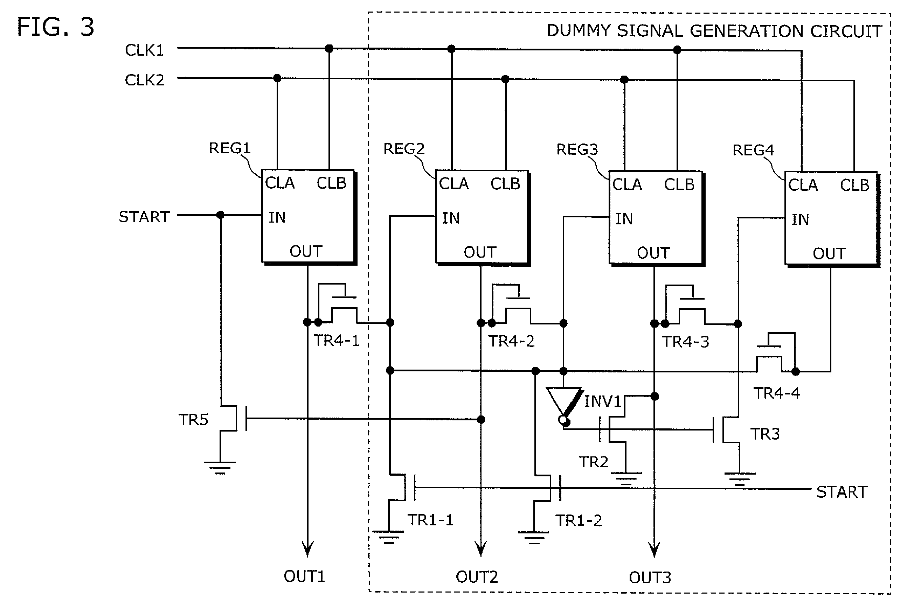

FIG. 3 is a block diagram showing a construction of the shift register, which is used as the shift register 111 or 112. Although only three stages are shown in this diagram, the register has a few hundred to a few thousand stages in reality.

As shown in FIG. 3, the shift register is composed of: unit registers REG1 to REG3 which each outputs a selection signal; a register REG4 which is connected to an input of the unit register REG3 that selects the last line and to an input of the unit register REG2 of the second last stage; transistors TR1-1 and TR1-2 which reset values held in the unit registers of the second and third last stages using the start signal for the shift register; an inverter circuit INV1 which generates an inversion signal of the input signal from the register REG3; and a transistor TR2 which resets the output of the unit register REG3 of the last line using the output signal from the above-mentioned inverter circuit INV1. Moreover, the output of the unit register REG4 of the last stage is connected to the inputs of the unit registers REG2 and REG3 of the previous stages, thus forming a register loop. A circuit indicated by a dash line in the diagram functions as a dummy signal generation circuit composed of at least two unit registers that respectively output dummy selection signals to the last line and a line that is at least second from the last line of the pixel unit.

Furthermore, the shift register is composed of a transistor TR3 which resets a value held in the register REG4 of the last stage using the output signal from the inverter circuit INV1. By resetting the value of the unit register REG4 of the last stage, a malfunction is prevented from occurring to the register loop.

Each of the unit registers REG1 to REG3 writes the value inputted to a terminal IN into the register during a High period of a clock signal CLA, and holds the value during a Low period of the signal. Then, the unit register outputs the hold signal from a terminal OUT during a High period of a clock signal CLB.

Each output terminal OUT of the unit registers REG1 to REG3 is connected, via a corresponding one of diode-connected unidirectional transistors TR4-1 to TR4-4, to the input terminal IN of a unit register of a next stage. Such a transistor having its gate and drain short circuited prevents current entry from the output of a unit register to the input of a unit register of a next stage and also prevents the value held in the register from being lost due to an output from a unit register of a previous stage.

The output OUT of the unit register REG4 of the last stage is connected, via the unidirectional transistor TR4-4, to each input terminal IN of the unit register REG3 of the second last stage and the unit register REG2 of the third last stage. A signal outputted, in synchronization with CLK1, from the unit register REG3 which selects the last line is held in the register REG4 in synchronization with CLK1. The value held in the register REG4 is next outputted in synchronization with CLK2, and held in the register REG3 in synchronization with CLK2. In this way, the loop made up of the register REG4 and the unit registers REG2 and REG3 of the previous stages allows for alternate repetitive outputs in synchronization with the clock signals CLK1 and CLK2.

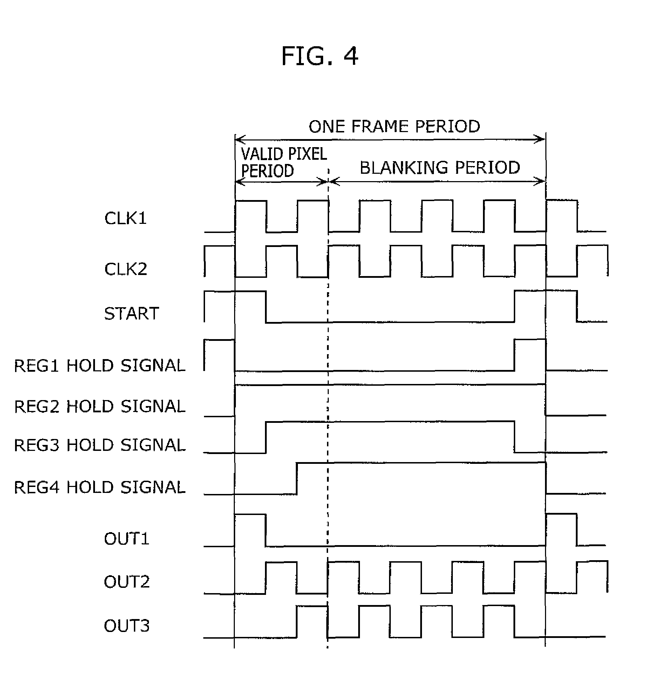

FIG. 4 is a timing chart showing drive timings of the shift register.

Upon the input of a start signal START for the shift register, the shift operation is started in synchronization with CLK1 and CLK2 and then selection signals OUT1 to OUT3 are sequentially outputted. The selection signal OUT3 is outputted from the unit register REG3 of the last line, and the scanning in the valid pixel period is thus completed. Then, until the start signal START is inputted for a next frame, dummy selection signals OUT2 and OUT3 are outputted respectively from the unit registers REG2 and REG3 of the last and second last lines.

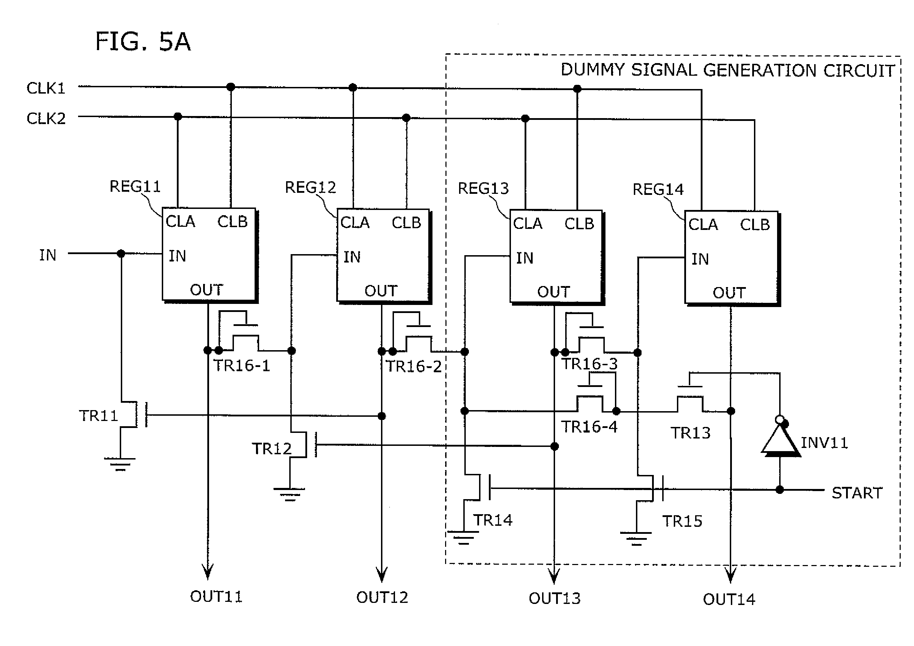

FIG. 5A is a block diagram showing another construction of the shift register according to the present embodiment of the present invention.

A circuit indicated by a dash line in the diagram functions as a dummy signal generation circuit composed of at least two unit registers that respectively output the dummy selection signals to the last line and a line that is at least second from the last line of the pixel unit. That is, in the shift register shown in this diagram, an output of a unit register REG14 of the last stage is connected to an input of a unit register REG13 of the second last stage, thus forming a register loop as in the case shown in FIG. 3. The shift register shown in FIG. 3 resets the value held in the unit register REG4 of the last stage using the start signal for the next frame, inverses the reset value in the inverter circuit INV1 and, using this signal, resets the output signal from the unit register REG4 of the last stage. On the other hand, the shift register shown in FIG. 5A resets the respective values and outputs of the unit register REG14 of the last stage and the unit register REG13 of the second last stage, using the start signal for the next frame. In other words, the inverter circuit INV11, transistors TR13, TR14, TR15, and TR16-4 represent a reset means that resets the registers REG13 and REG14 using the start signal for the shift register.

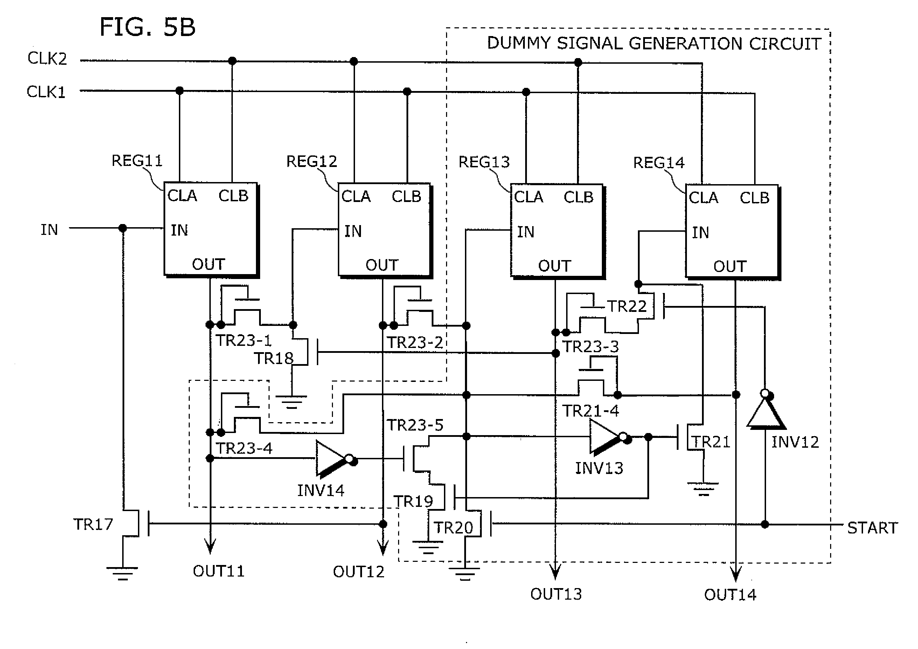

FIG. 5B is a block diagram showing another construction of the shift register.

A circuit indicated by a dash line in the shift register shown in this diagram functions as a dummy signal generation circuit composed of at least two unit registers that respectively output the dummy selection signals to the last line and a line that is at least second from the last line of the pixel unit. An output of a unit register of the last stage is connected to an input of a unit register of the second last stage via a transistor TR21-4 as is the case with FIG. 5A, thus forming a loop with registers REG13 and REG14 as is the case with FIG. 3.

An inverter circuit INV12 and transistors TR20, TR22, and TR23-3 of the dummy signal generation circuit make up a circuit that resets the registers REG13 and REG14 using the start signal for the shift register. This circuit resets values held in the unit registers REG13 and REG14 of the last and second last stages, using the start signal for a next frame.

Moreover, an inverter circuit INV13, transistors TR21, TR19, TR20, TR23-4, TR23-5, and an INV14 make up a reset circuit that resets a value held in the unit register REG14 of the last stage using an inversion signal of a value held in the unit register REG13 of the second last stage. The transistor TR21 resets the value held in the unit register REG14 of the last stage using the inversion signal (i.e., the output from the inverter circuit INV13) of the value held in the unit register REG13 of the second last stage. The transistor TR19 resets the value held in the unit transistor REG13 of the second last stage using the above-mentioned inversion signal (the transistor 23-5 is On at this time).

Furthermore, the inverter circuit INV14 turns off the transistor TR23-5 when an output OUT11 of the unit register REG11 is High (Accordingly, when a shift is made from the unit register REG12 to the unit register REG13, the loop made up of the inverter circuit INV13 and the transistors TR19 and TR23-5 is disconnected.).

With this construction, the circuit configuration can be simplified without adding registers, as is the case with FIG. 5A. Also, the reset circuit pulls down the register loop, thereby preventing a malfunction such as an oscillation.

With this construction, no additional unit register is needed subsequent to the unit register that selects the last line, which contributes to the simplification of the circuit configuration.

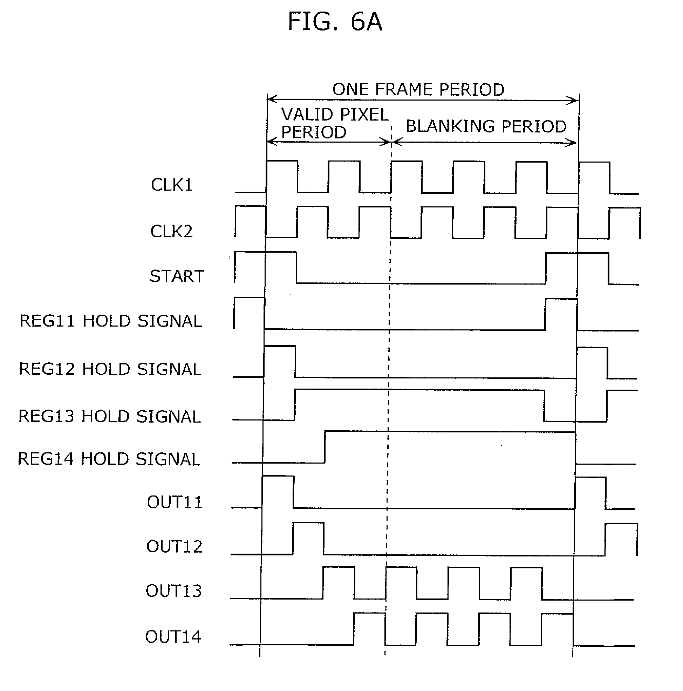

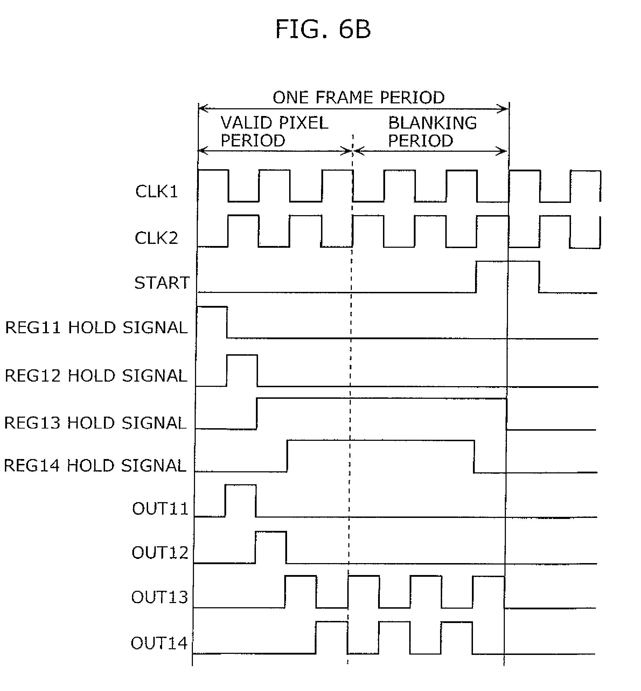

FIGs. 6A and 6B are timing charts showing drive timings of the shift registers respectively shown in FIGs. 5A and 5B.

As in the case shown in FIG. 4, upon the input of a start signal START for the shift register, the shift operation is started in synchronization with CLK1 and CLK2 and then selection signals OUT1 to OUT4 are sequentially outputted. The selection signal OUT4 is outputted from the unit register REG4 of the last line, and the scanning in the valid pixel period is thus completed. Then, until the start signal START is inputted for a next frame, dummy selection signals are outputted respectively from the unit registers of the last and second last stages.

According to the present embodiment as described so far, even after the end of the period for reading the pixels, both of the readout shift register and the electronic shutter shift register keep sending the selection signals to the pixel unit so that the variations in the electric potential state of the vertical output signal line caused during the scanning period of the image pickup elements are eliminated and that occurrence of noise resulting from the electronic shutter operation can be prevented. In particular, a horizontal strip noise can be prevented from occurring to an image, and thus a high-quality image can be obtained.

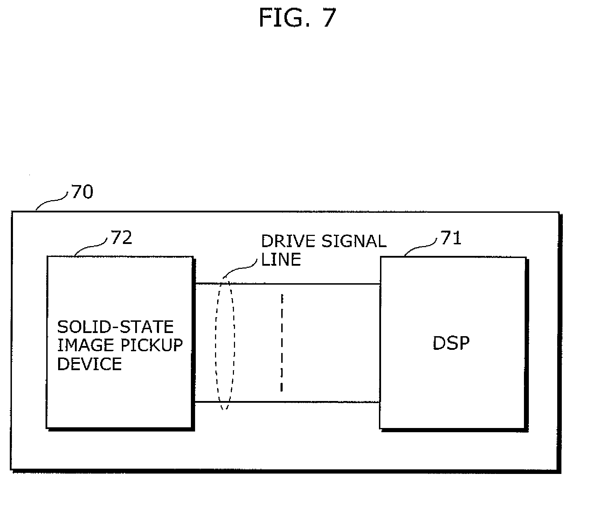

FIG. 7 is a diagram showing a construction of a camera that employs the solid-state image pickup device according to the present embodiment of the present invention. A camera 70 is composed mainly of a DSP 71 that applies various drive pulses to a solid-state image pickup device 70.

The above-described shift registers 111 and 112 are included in the solid-state image pickup device 70, and the clock signals CLK1 and CLK2 and the start signal START are supplied from the DSP 71.

Such a construction can prevent noise occurrence that may be caused due to the electronic shutter operation as well as preventing a horizontal strip noise in an image, and a high-quality image can be thus obtained. Therefore, it is suitable for a mobile camera incorporated into a cellular phone or the like, and for a digital steel camera.

### (Second Embodiment)

In the case of the solid-state image pickup device of the first embodiment, the selection signals SHT(1) to SHT(m) are outputted in synchronization with the pulses of the clock signals CLK1 and CLK2. In the second embodiment, an explanation is given as to a solid-state image pickup device which allows output timings of the selection signals SHT(1) to SHT(m) not only to be in synchronization with the clock signals CLK1 and CLK2, but also to be arbitrarily set, thereby allowing a signal accumulation period to be set with more flexibility. In other words, the second embodiment describes an invention relating to an improvement of a multiplexer circuit for solving a problem as to a horizontal bright strip (bleached strip) that may appear in the lower part of an image when the multiplexer circuit shown in FIG. 17 is simply applied to the solid-state image pickup device of the first embodiment.

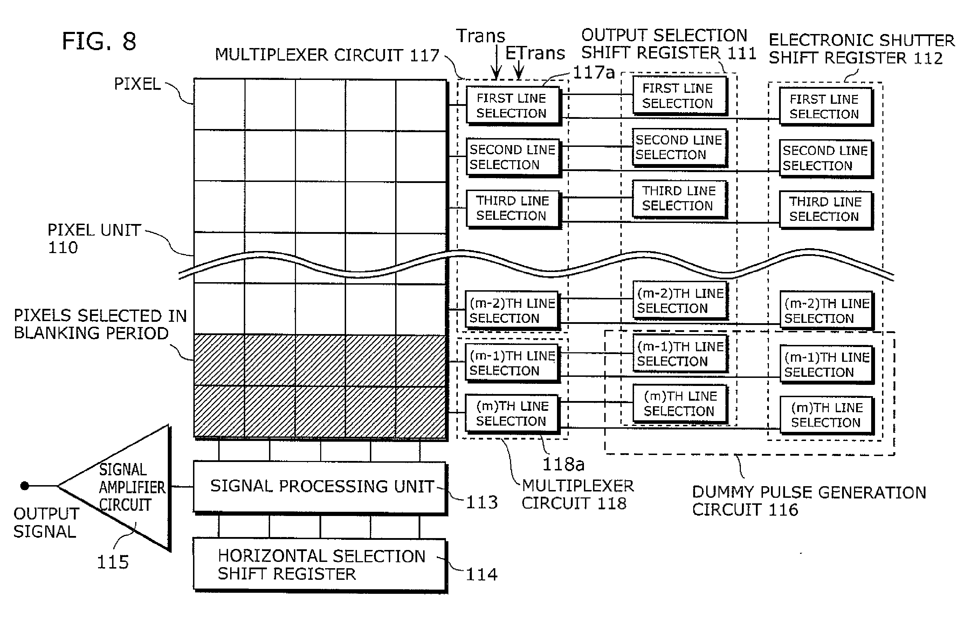

FIG. 8 is a diagram showing a construction of the solid-state image pickup device according to the second embodiment of the present invention. This solid-state image pickup device is different from the solid-state image pickup device shown in FIG. 1 in that a multiplexer circuit 117 and a multiplexer circuit 118 are added. Components with the same numerals as in FIG. 1 have the same functions, so they are not explained. The following description focuses mainly on different aspects.

The multiplexer circuit 117 is composed of a plurality ((m-2) in FIG. 8) of unit selection circuits 117a.

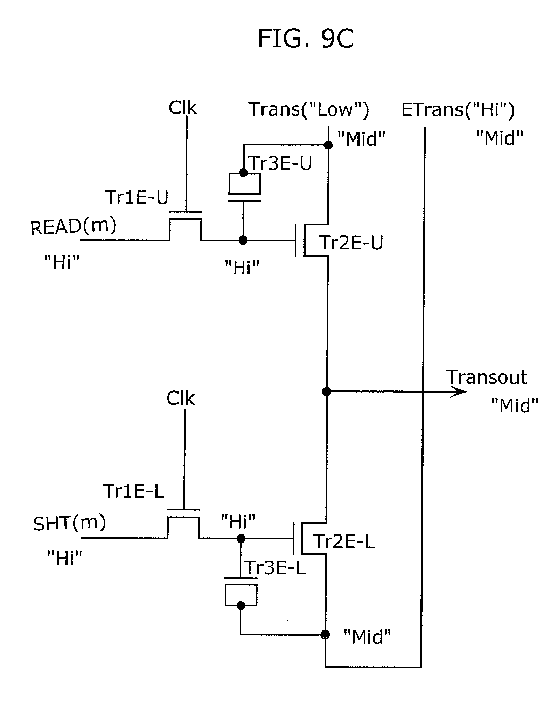

A selection signal READ(i) from a unit register REGi of the shift register 11, a selection signal SHT(i) from a unit register REGi of the shift register 112, a drive signal Trans for specifying an output timing of the selection signal READ(i), and a drive signal Etrans for specifying an output timing of the selection signal SHT(i) are inputted to each unit selection circuit 117a. The unit selection circuit 117a outputs the selection signal READ(i) in accordance with a pulse timing of the drive signal Trans, and outputs the selection signal SHT(i) in accordance with a pulse timing of the drive signal ETrans. Here, "i" is one of 1 to (m-2). This unit selection circuit 117a may be the circuit which is disclosed in Patent Reference 2. However, there is a problem where, when the selection signal SHT(i) and the selection signal READ(i) become High level at the same time, the drive signals Trans and ETrans are short circuited and brought to Middle level (see FIG. 9C).

In addition to the function of the unit selection circuit 117, each unit selection circuit 118a is further composed of: a switch that electrically separates one of the selection signal SHT(i) and the selection signal READ(i) when these selection signals become High level at the same time; and a ground circuit that inputs Low level instead of the separated selection signal. These additional functions are provided in order to solve the above-stated problem as to the bleached strip.

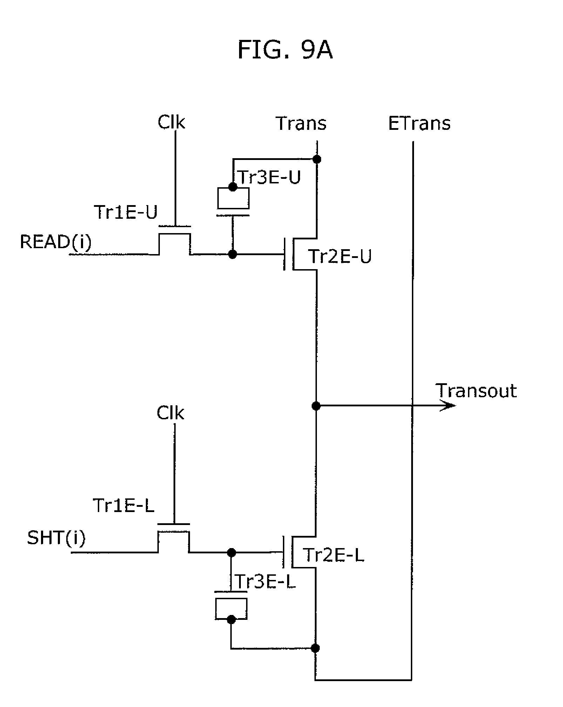

FIG. 9A is a circuit diagram showing a construction of the unit selection circuit 117a. As shown, the unit selection circuit 117a is composed of two bootstrap circuits for respectively holding the selection signal READ(i) from the shift register 111 and the selection signal SHT(i) from the shift register 112 and outputting the hold signals in synchronization with the drive signals.

The bootstrap circuit for the selection signal READ(i) includes: a transistor Tr1E-U for controlling the input of the selection signal READ(i); a transistor Tr2E-U for holding a level of the inputted selection signal; and a transistor Tr3E-U which is of an enhancement type used as a boost capacity. Meanwhile, the bootstrap circuit for the selection signal SHT(i) is similarly composed of transistors Tr1E-L, Tr2E-L, and Tr3E-L. With this construction, the transistors Tr2E-L and Tr3E-L function as an output circuit for outputting the selection signal SHT(i) to a signal line Transout in synchronization with the drive signal ETrans. The transistors Tr2E-U and Tr3E-U function as an output circuit for outputting the selection signal READ(i) to the signal line Transout in synchronization with the drive signal Trans.

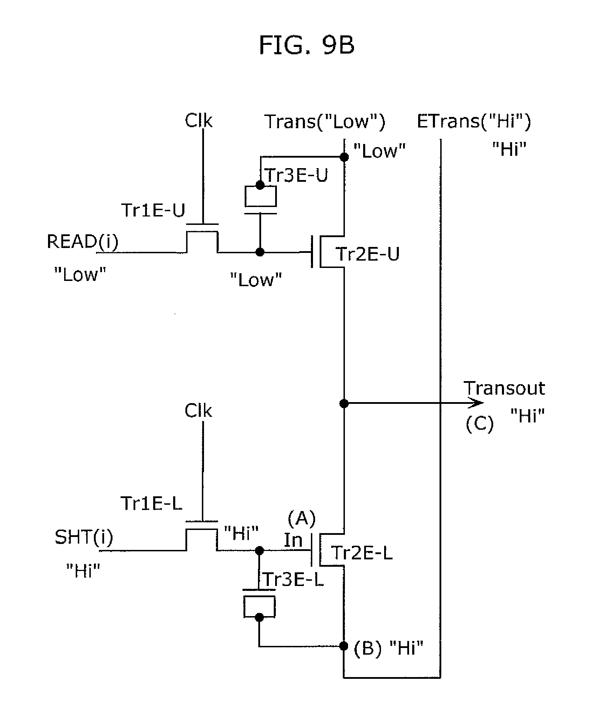

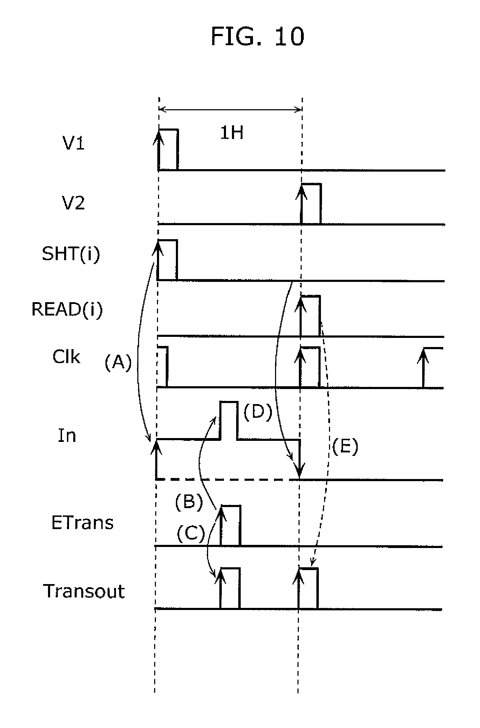

FIG. 9B is a diagram for explaining an example of an operation performed by the unit selection circuit 117a when the selection signal READ(i) and the selection signal SHT(i) do not become High level at the same time. FIG. 10 is a timing chart for the lower half shown in FIG. 9B (i.e., the SHT(i) side). V1 and V2 shown in the diagram are operating clocks of the shift registers 111 and 112. Also, In shows a hold level of a gate capacity of the transistor Tr2E-L. In FIGs. 9B and 10, the pulse of the selection signal SHT(i) passes through the transistor Tr1E-L, and is held in the gate capacity In of the transistor Tr2E-L (indicated by (A) in the diagram). The gate capacity In is to hold the pulse approximately for one horizontal scanning period until a pulse of a next clock signal CLK is inputted. A pulse position of the drive signal ETrans shows a timing desired for the electronic shutter, and is arbitrarily set within the horizontal scanning period. The application of the pulse of the drive signal ETrans boosts the gate of the transistor Tr2E-L on account of the boost capacity (the transistor Tr3E-L), so that the transistor Tr2E-L is brought into a full On state (see (B) in the diagram). As a result, the pulse of the drive signal ETrans is outputted as a selection signal Transout (see (C) in the diagram). It should be noted that although the drive signal Trans for specifying the output timing of the selection signal READ(i) is not shown in FIG. 10, the timing is in the same position as with the pulse position of the clock signal V2. In this case, the selection signal READ(i) is outputted as the selection signal transout as shown in diagram (see (E) in the diagram). Note that an interval between the two pulses of the selection signals transout in the diagram, that is, an interval from the pulse of SHT(i) to the READ(i) is an exposure time (i.e., the signal accumulation time) of the electronic shutter.

Since no dummy pulse is inputted to the unit selection circuit 117a, one of SHT(i) and READ(i) is High level and the other is Low level as shown in FIGs. 9B and 10, meaning that both of them never become High level at the same time. On the other hand, since a dummy pulse is inputted to the unit selection circuit 118a, both of them may become High level at the same time.

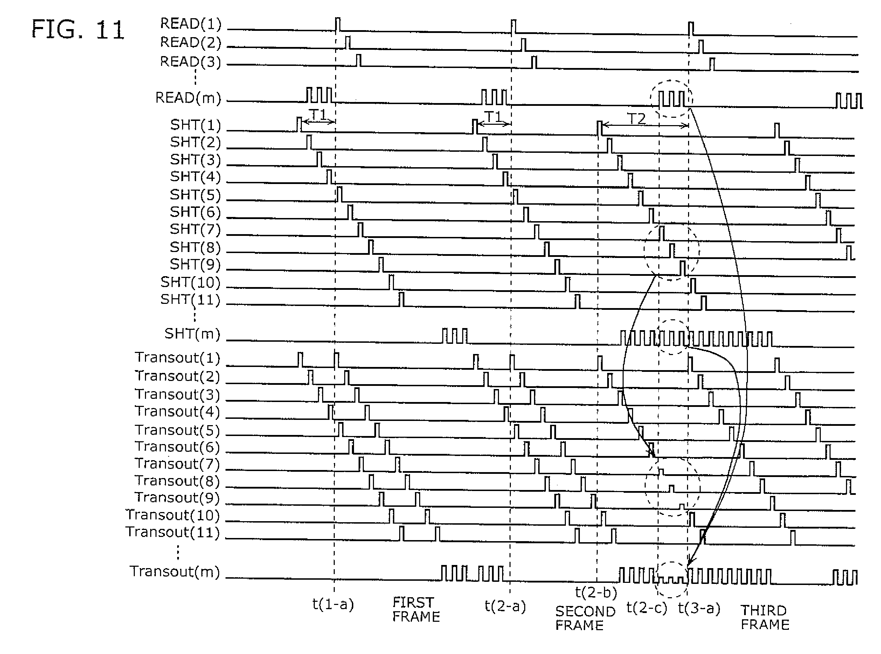

Next, before the construction of the unit selection circuit 118a is described, a detailed explanation is given with reference to FIGs. 9C and 11 about the problem as to the above-mentioned bleached strip caused because both the SHT(i) and READ(i) become High level.

FIG. 9C is a diagram for explaining a malfunction with the assumption that the selection signals SHT(m) and READ(m) of High level are inputted to the unit selection circuit 117a. In other words, this diagram shows a malfunction that may be caused in a case where the solid-state image pickup device of FIG. 8 is assumed to have the unit selection circuit 117a instead of the unit selection circuit 118a included in the multiplexer circuit 118. In FIG. 9C, the selection signals SHT(m) and READ(m) are High level at the same time. This state may be caused while a dummy pulse is occurring. At this point in time, when the clock signal Clk becomes High level, the High levels of the selection signals SHT(m) and READ(m) are inputted to the gates of the two transistors Tr2E-U and Tr2E-L. This brings the two transistors Tr2E-U and Tr2E-L into the On state at the same time. At this point in time, when either of the drive signals Trans and ETrans becomes High level (in the diagram, the drive signal Trans is Low level whereas the drive signal ETrans is High level), the drive signals Trans and ETrans are short circuited via the two On-state transistors Tr2E-U and Tr2E-L.

This short circuit brings not only the selection signal Transout outputted from the unit selection circuit in FIG. 9C, but also the drive signals Trans and ETrans which are input signals, into an intermediate level (referred to as "Middle level" hereafter) which is not High nor Low level. The drive signals Trans and ETrans are supplied not only to the unit selection circuit of FIG. 9C but to all of the unit selection circuits as well. For this reason, the Middle-level drive signal Trans or ETrans drives the unit selection circuit, which is currently shifting the pulse, to output a Middle-level selection signal Transout.

With the Middle-level selection signal Transout, the electronic shutter operation cannot be completely performed. To be more specific, when the Middle-level selection signal Transout is supplied to the readout signal line 207 shown in FIG. 15B, the read transistor 202 will be in an incomplete On state, not in the full On state. In the full On state, the read transistor 202 reads the entire electrical charge (i.e., fully reads out) from the photodiode 201 to the FD unit 203. However, in the incomplete On state, the read transistor 202 causes the electrical charge to remain in the photodiode 201. As a result of this, the pixels belonging to the line for which the Middle-level selection signal Transout has been supplied become bleached (or, become brighter). Consecutive such lines thus result in a bleached strip on a pickup image, degrading the image quality.

FIG. 11 is a timing chart showing drive timings in the case where the solid-state image pickup device is assumed to have the unit selection circuit 117a instead of the unit selection circuit 118a and then a bleached strip occurs.

In the diagram: READ(1) to READ(m) are m number of selection signals for readout that are outputted from the shift register 111; SHT(1) to SHT(m) are m number of selection signals for the electronic shutter that are outputted from the shift register 112; and Transout(1) to Transout(m) are m number of selection signals outputted from the unit register 117a. Note that a period of time measured from a time t(1-a) to a time t(2-a) is a first frame period, a period of time measured from the time t(2-a) to a time t(3-a) is a second frame period, and so on. Also note that a period of time measured from SHT(1) to READ(1) is an exposure time (release time) of the electronic shutter.

This diagram shows a case where the exposure time is a time T1 until the first frame period and is changed from the time T1 to a time T2 in the second frame period.

With attention being focused on the electronic shutter operation, the shift register 112 shifts out SHT(1) to SHT(m) sequentially by the application of the start signal SHT (indicated as the start signal "START" in FIG. 3) immediately before the first frame period (about the time T1 prior to the time t(1-a)). After outputting the pulse of SHT(m), the shift register 112 outputs a dummy pulse alternately from the unit register (m-1) and the unit register (m) during the first frame period.

Immediately before the second frame period (about the time T1 prior to the time t(2-a)), the shift register 112 stops outputting the dummy pulse by the application of the start signal SHT. In other words, the start signal SHT resets the unit registers REG(m-1) and REG(m) of the shift register 112.

Since the exposure time is changed from T1 to T2 in the second frame period, the start signal SHT is applied to the shift register 112 immediately before the second frame period (about the time T2 prior to the time t(3-a), that is, at the time t(2-b)). This start signal SHT resets the unit registers REG(m-1) and REG(m). At this point in time, however, the pulse has yet to reach the unit register REG(m-1). Moreover, immediately after the pulse reached the unit register REG(m), each of the unit registers REG(m-1) and REG(m) emit the dummy pulse. This dummy pulse is kept outputted until the start signal SHT is applied in the next third frame period after the blanking period in the second frame period (from the time t(2-c) to the time t(3-a)).

There is a possibility that both the dummy pulse of READ(m) and the dummy pulse of SHT(m) become High level at the same time during the blanking period in the second frame period. There is also a possibility that both the dummy pulse of READ(m-1) and the dummy pulse of SHT(m-1) become High level at the same time.

In FIG. 11, the dummy pulse of READ(m) and the dummy pulse of SHT(m) are High level at the same time (indicated by dash line circles in the diagram). As a result of this, the selection signal Transout(m) outputted from the unit selection circuit 117a of the m^{th} stage becomes Middle level and the drive signals Trans and ETrans thus become Middle level as shown in FIG. 9C.

This Middle-level drive signal ETrans is inputted to all of the unit selection circuits 117a. Thus, the selection signals SHT(7), SHT(8), and SHT(9) respectively outputted from the 7^{th}, 8^{th}, and 9^{th} unit selection circuits 117a which are shifting the pulses during the blanking period are all driven by the Middle-level drive signal ETrans, thereby making the selection signals Transout(7) to Transout(9) become Middle level. As a result, the shutter operation for the pixels belonging to the 7^{th}, 8^{th}, and 9^{th} lines are performed incompletely, and this appears as a bleached strip on the image.

In this way, there is a problem where a bleached strip occurs to the image in the case where the solid-state image pickup device of FIG. 8 is assumed to have the unit selection circuit 117a instead of the unit selection circuit 118a included in the multiplexer circuit 118.

Next, an explanation is given as to a construction of the unit selection circuit 118a that prevents a bleached strip from occurring.

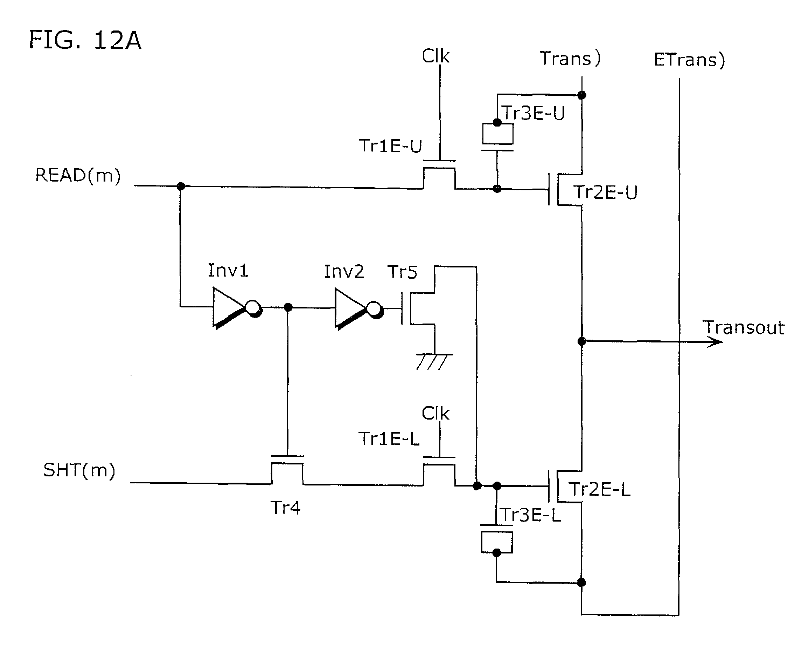

FIG. 12A is a circuit diagram showing the construction of the unit selection circuit 118a included in the multiplexer circuit 118 shown in FIG. 8. As compared to the unit selection circuit 117a shown in FIG. 9A, the unit selection circuit 118a is different in that inverters Inv1 and Inv2 and transistors Tr4 and Tr5 are added. In the following description, the same parts are not explained and the different parts are mainly explained.

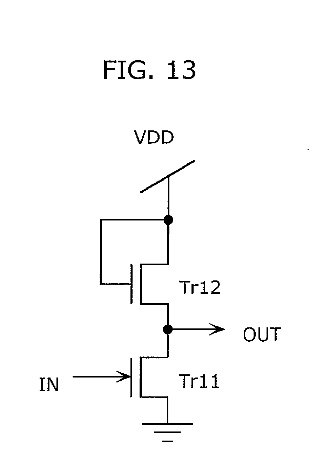

As shown in FIG. 13, the inverter Inv1 is composed of, for example, a drive transistor Tr11 and a load transistor Tr12 serving as a load resistance, which are series connected between a ground line and a power line. The inverter inv2 has the same construction as well. It is preferable to set a resistance value of the load transistor Tr12 greater than a resistance value of the drive transistor Tr11. By doing so, there would be a time difference between a rise time and a fall time. To be more specific, there would be a time delay before the rise, so that a pull-down operation performed by the transistor Tr5 can be delayed with respect to an input cutoff operation performed by the transistor Tr4.

The inverter Inv1 and the transistor Tr4 electrically separate the input signal line of the selection signal SHT(m) from the unit selection circuit 118a, by an Off state of the transistor Tr4 when the selection signal READ(m) is High level. In this case, the transistor Tr4 functions as a cutoff switch. When the selection signal READ(m) is Low level, the transistor Tr4 is in the On state.

When the selection signal READ(m) is High level, the transistor Tr5 becomes the On state. By this On state of the transistor Tr5, the inverter Inv2 and the transistor Tr5 pull down the gate of the transistor Tr2E-L to Low level so as to forcefully bring the transistor Tr2E-L into the Off state. In this way, the inverters Inv1 and Inv2 and the transistor Tr5 function as a stop circuit for forcefully stopping the operations of the transistor Tr2E-L and the transistor Tr3E-L. With this, the Transout signal line and the Etrans signal line connected to each other via the transistor Tr2E-L are electrically separated. When the selection signal READ(m) is Low level, the transistor Tr5 does not forcefully bring the transistor Tr2E-L into the Off state.

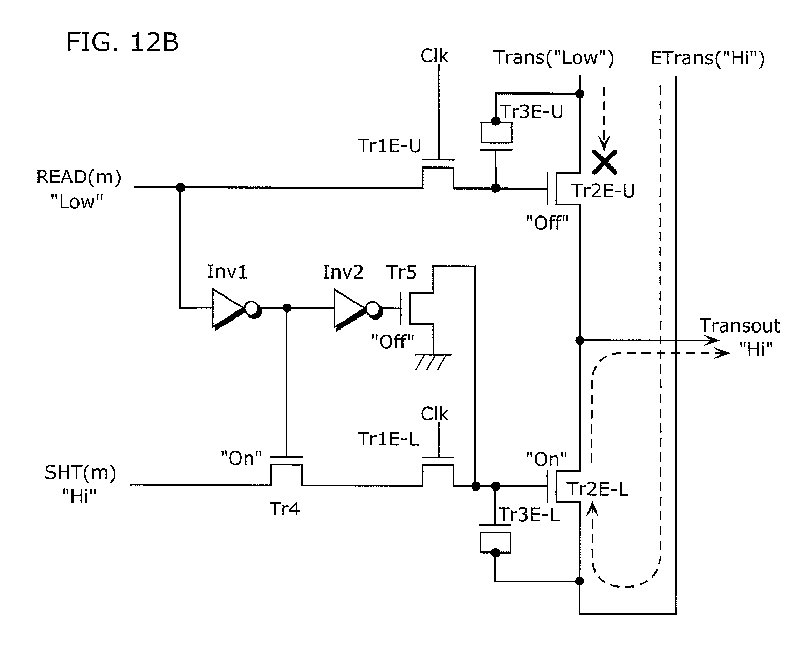

FIG. 12B is a diagram for explaining an operation of the unit selection circuit 118a performed when the selection signal READ(m) is Low level and the selection signal SHT(m) is High level. In this case, since High level is applied to the gate of the transistor Tr4 from the inverter Inv1, the transistor Tr4 is in the On state. Moreover, since Low level is applied to the gate of the transistor Tr5 from the inverter Inv2, the transistor Tr5 is in the Off state. High level of the selection signal SHT(m) is held in the gate capacity of the transistor Tr3E-L, and is also applied to the gate of the transistor Tr2E-L so as to bring the transistor Tr2E-L into the On state. Meanwhile, Low level of the selection signal READ(m) is applied to the gate of the transistor Tr2E-U so that the transistor Tr2E-U stays in the Off state.

When the pulse of the drive signal ETrans is inputted in this state, a pulse is outputted to the selection signal Transout in synchronization with the pulse of the drive signal ETrans as with the case shown in FIGs. 9B and 10.

Moreover, when the selection signal READ(m) and the selection signal SHT(m) are Low level, each of the transistors Tr2E-U and Tr2E-L is in the Off state, meaning that the selection signal Transout is Low level.

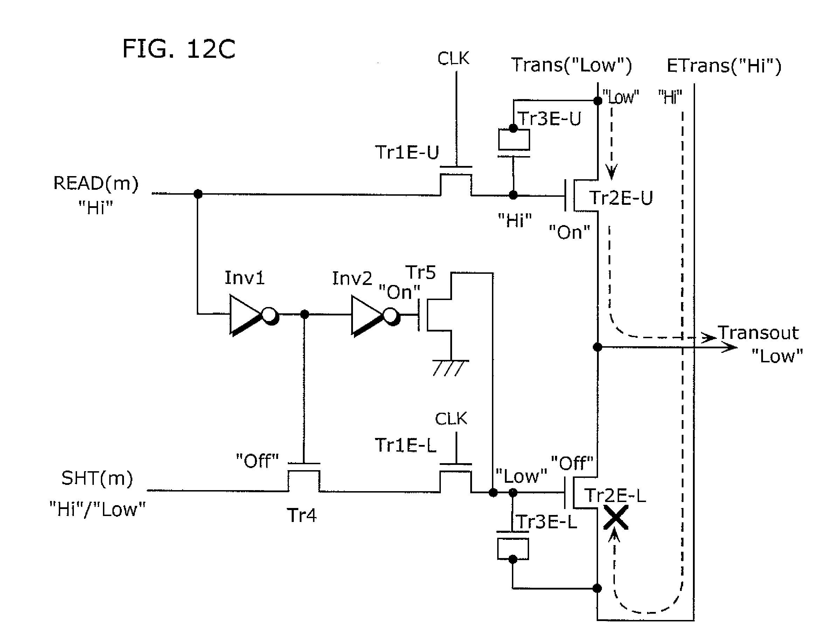

FIG. 12C is a diagram for explaining an operation of the unit selection circuit 118a performed when the selection signal READ(m) is High level. In this case, since Low level is applied to the gate of the transistor Tr4 from the inverter Inv1, the transistor Tr4 is in the Off state. Moreover, since High level is applied to the gate of the transistor Tr5 from the inverter Inv2, the transistor Tr4 is in the On state. As a result, the input signal line of the selection signal SHT(m) is electrically separated by the transistor Tr4. The transistor Tr5 forcefully brings the gate of the transistor Tr2E-L into Low level, so that the transistor Tr2E-L is in the Off state. Meanwhile, High level of the selection signal READ(m) is held in the gate capacity of the transistor Tr2E-U, and is also applied to the gate of the transistor Tr2E-U so as to bring the transistor Tr2E-U into the On state.

When the pulse of the drive signal ETrans is inputted in this state, the selection signal Transout receives no influence since the transistor 2E-L is in the Off state. When the drive signal Trans is Low level, the selection signal Transout outputs Low level. Also, when the drive signal Trans is inputted as a pulse, the selection signal Transout outputs the pulse.

As described so far, when the selection signal READ(m) is Low level, the unit selection circuit 118a performs the same operation that is performed by the unit selection circuit shown in FIG. 9A. When the selection signal READ(m) is High level, the unit selection circuit 118a electrically separates the input signal line of SHT(m) and forcefully turns off the transistor Tr2E-L.

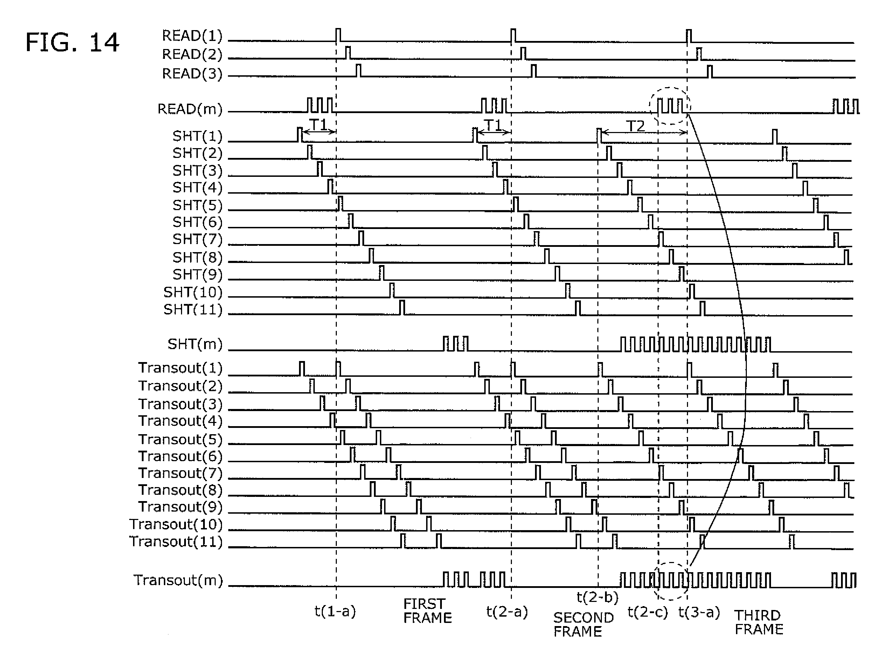

FIG. 14 is a timing chart showing drive timings of the shift register. This diagram shows a case where the exposure time is changed from T1 to T2 in the second frame period, as is the case with FIG. 11. As shown in FIG. 14, READ(m) and SHT(m) are High level at the same time during the blanking period in the second frame period. When READ(m) is High level, the selection signal Transout(m) corresponding to the pulse of READ(m) is outputted since SHT(m) is neglected due to the electrical circuit separation by the unit selection circuit 118a.

As described so far, the solid-state image pickup device according to the present embodiment prevents the drive signals Trans and ETrans from shorting out when the selection signals READ(m) and SHT(m) are both High level, thereby eliminating a malfunction where the drive signals Trans and ETrans become Low level and thus solving the problem as to a horizontal bleached strip appearing in the lower part of an image that degrades the image quality. Accordingly, the timing of the electronic shutter can be arbitrarily set within one horizontal scanning period, and the image quality can be prevented from degrading. Moreover, the number of the unit selection circuits 118a only needs to correspond to the number of the unit registers that generate the dummy pulses. This means that an increase in the circuit size and, by extension, an increase in the chip size, can be small. In particular, since the unit selection circuits 118a can be set using free space of the top and bottom inside the chip, a circuit layout in the chip can be smaller as compared to the conventional one.

It should be noted here that in the unit selection circuit 118a shown in FIG. 12A, READ(m) and SHT(m) may be interchanged and the drive signals Trans and ETrans may also be interchanged.

### Industrial Applicability

As a solid-state image pickup device that prevents noise occurrence caused by an electronic shutter operation and thus obtains a high-quality image, the solid-state image pickup device of the present invention can be applied to a digital still camera, a mobile camera, and the like, and is especially useful.

## Claims

1. A MOS type solid-state image pickup device comprising a pixel unit and a plurality of shift registers, said pixel unit including image pickup elements arranged in a matrix, and said plurality of shift registers each selecting a line or a column of said pixel unit,
wherein at least one of said plurality of shift registers, each of which selects a line, includes:
a plurality of unit registers, each of which holds a selection signal; and
a dummy signal generation circuit which outputs a dummy selection signal to a last line and a line that is at least second from the last line of said pixel unit, during a blanking period of a line scanning operation performed on said pixel unit.

2. The MOS type solid-state image pickup device according to Claim 1,
wherein said dummy signal generation circuit has a reset circuit which resets a unit register of a last stage and a unit register of a second-from-the-last stage using a value of said unit register that is one stage ahead of said unit register that selects the last line.

3. The MOS type solid-state image pickup device according to Claim 2,
wherein the dummy selection signal is outputted alternately to the last line and the line that is at least second from the last line, at constant intervals.

4. The MOS type solid-state image pickup device according to one of Claim 1 to Claim 3,
wherein said dummy signal generation circuit
includes a unit register of a last stage and a unit register of a stage that is at least second from the last stage, and
constructs a loop by inputting an output signal of said unit register of the last stage to said unit register of the stage that is at least second from the last stage.

5. The MOS type solid-state image pickup device according to Claim 4,
wherein said unit register of the last stage is set subsequent to said unit register that selects the last line of said pixel unit, and
the output signal of said unit register of the last stage is inputted to said unit register that selects the last line and to said unit register that selects the second-from-the-last line.

6. The MOS type solid-state image pickup device according to Claim 4,
wherein said unit register of the last stage selects the last line of said pixel unit, and
the output signal of said unit register of the last stage is inputted to said unit register of the second-from-the-last stage.

7. The MOS type solid-state image pickup device according to one of Claim 4 to Claim 6,
wherein the output signal of said unit register of the last stage is inputted to said unit register of the stage that is at least second from the last stage, via a current-entering prevention unit.

8. The MOS type solid-state image pickup device according to one of Claim 4 to Claim 7,
wherein a value held in said unit register of the second-from-the-last stage is inputted to and held in said unit register of the last stage, in synchronization with a first signal for a shift operation of said shift register which selects a line, and
a value held in said unit register of the last stage is inputted to and held in said unit register of the second-from -the- last stage, in synchronization with a second signal for a shift operation of said shift register which selects a line.

9. The MOS type solid-state image pickup device according to Claim 8,
wherein said dummy signal generation circuit further has a reset unit which is operable to reset the value held in said unit register of the last stage, using a start signal for said shift register.

10. The MOS type solid-state image pickup device according to Claim 9,
wherein said reset unit is further operable to reset an output of said unit register of the last stage, using an inversion signal of the start signal.

11. The MOS type solid-state image pickup device according to Claim 8, further comprising
a reset unit operable to reset the value held in said unit register of the last stage and an output of said unit register of the last stage, using a start signal for said shift register.

12. The MOS type solid-state image pickup device according to one of Claim 1 to Claim 11,
wherein said shift registers, each of which selects a line, includes: a readout shift register which outputs a line selection signal to select a line of said pixel unit for an operation performed to read out an output signal of said pixel unit; and an electronic shutter shift register which outputs a line selection signal to select a line of said pixel unit for an electronic shutter operation.

13. The MOS type solid-state image pickup device according to one of Claim 1 to Claim 12,
wherein each of said readout shift register and said electronic shutter shift register outputs the dummy selection signal during the blanking period.

14. The MOS type solid-state image pickup device according to Claim 12, further comprising
a multiplexing unit operable to multiplex, for each line, the line selection signal outputted from said readout shift register and the line selection signal outputted from said electronic shutter register and to output the multiplexed signal to said pixel unit,
wherein when a first dummy signal and a second dummy signal are outputted to the same line at the same time, said multiplexing unit is operable to cut off one of the inputs of the first and second dummy signals, the first dummy signal being the dummy selection signal outputted from said readout shift register, and the second dummy signal being the dummy selection signal outputted from said electronic shutter shift register.

15. The MOS type solid-state image pickup device according to Claim 14,
wherein said multiplexing unit includes a cut-off switch which electrically cuts off one of the inputs of the first and second dummy signals outputted to the same line at the same time, by using the other one of the dummy selection signals.

16. The MOS type solid-state image pickup device according to Claim 14 or Claim 15,
wherein said cut-off switch is turned on or off in accordance with the first dummy signal.

17. The MOS type solid-state image pickup device according to Claim 16,
wherein said multiplexing unit includes a first output circuit and a second output circuit, said first output circuit outputting the first dummy signal to a line-selection signal line in synchronization with a first drive signal, and said second output circuit outputting the second dummy signal to the line-selection signal line in synchronization with a second drive signal, and
said cut-off switch is inserted into an input signal line which transmits the second dummy signal to said second output circuit.

18. The MOS type solid-state image pickup device according to Claim 17,
wherein said multiplexing unit further includes a stop circuit, which stops an operation of said second output circuit when the first and second dummy signals are outputted to the same line at the same time.

19. The MOS type solid-state image pickup device according to Claim 18,
wherein said stop circuit further stops said second output circuit when the first dummy signal is outputted.

20. The MOS type solid-state image pickup device according to Claim 18 or Claim 19,
wherein said stop circuit has an inverter for inverting the first dummy signal, and turns off said cut-off switch in accordance with the inversion signal.

21. The MOS type solid-state image pickup device according to Claim 20,
wherein said inverter has a load resistance and a drive transistor which are series connected between a power line and a ground line, and
a resistance value of said load resistance is greater than a resistance value of said drive transistor.

22. The MOS type solid-state image pickup device according to Claim 19,
wherein said cut-off switch and said stop circuit are provided corresponding to a line to which the first and second dummy signals are to be outputted.

23. A camera which comprises said MOS type solid-state image pickup device according to one of Claim 1 to Claim 22.

24. A method for driving a MOS type solid-state image pickup device which comprises a pixel unit and a plurality of shift registers, said pixel unit including image pickup elements arranged in a matrix, and said plurality of shift registers each selecting a line or a column of said pixel unit, and said method comprising
a step of outputting, during a blanking period of a line scanning operation performed on said pixel unit, a dummy selection signal to at least a last line of said pixel unit from a shift register, out of the plurality of shift registers which each select a line.

25. The method for driving the MOS type solid-state image pickup device according to Claim 24,
wherein the shift register for selecting a line outputs the dummy selection signal to the last line and a line that is at least second from the last line, the lines being included in said pixel unit.

26. The method for driving the MOS type solid-state image pickup device according to Claim 25,
wherein the dummy selection signal is outputted alternately to the last line and the line that is at least second from the last line, at constant intervals.

27. The method for driving the MOS type solid-state image pickup device according to one of Claim 24 to Claim 26,
wherein a signal for driving at least said shift register which selects a line is externally supplied.

28. A method for driving a MOS type solid-state image pickup device which comprises a pixel unit, a readout shift register, and an electronic shutter shift register, said pixel unit including image pickup elements arranged in a matrix, said readout shift register outputting a line selection signal to select one line of said pixel unit for an operation performed to read out an output signal of said pixel unit, said electronic shutter shift register outputting a line selection signal to select one line of said pixel unit for an electronic shutter operation, and said method comprising
a step of outputting, during a blanking period of a line scanning operation performed on said pixel unit, a dummy selection signal to at least a last line of said pixel unit from each of said readout shift register and said electronic shutter shift register.

29. The method for driving the MOS type solid-state image pickup device according to Claim 28,
wherein each of said readout shift register and said electronic shutter shift register outputs the dummy selection signal to the last line and a line that is at least second from the last line, the lines being included in said pixel unit.

30. The method for driving the MOS type solid-state image pickup device according to Claim 29,
wherein the dummy selection signal is outputted alternately to the last line and the line that is at least second from the last line, at constant intervals.

31. The method for driving the MOS type solid-state image pickup device according to one of Claim 28 to Claim 30,
wherein signals for respectively driving at least said readout shift register and said electronic shutter shift register are externally supplied.

32. The method for driving the MOS type solid-state image pickup device according to Claim 28, said MOS type solid-state image pickup device further comprising a multiplexer which multiplexes, for each line, the line selection signal outputted from said readout shift register and the line selection signal outputted from said electronic shutter register and outputs the multiplexed signal to said pixel unit, said method further comprising
a step of cutting off, when a first dummy signal and a second dummy signal are outputted to the same line at the same time, one of the inputs of the first and second dummy signals to said multiplexer, the first dummy signal being the dummy selection signal outputted from said readout shift register, and the second dummy signal being the dummy selection signal outputted from said electronic shutter shift register.

33. The method for driving the MOS type solid-state image pickup device according to Claim 32,
wherein in said cutting-off step, one of the inputs of the first and second dummy signals outputted to said multiplexer to the same line at the same time is electrically cut off by using the other one of the dummy selection signals.

34. The method for driving the MOS type solid-state image pickup device according to Claim 33,
wherein in said cutting-off step, the input of the second dummy signal to said multiplexer is cut off in accordance with the first dummy signal.
